# EUROPÄISCHE PATENTSCHRIFT

(11) **EP 0 507 245 B1**
(45) Veröffentlichungstag und Bekanntmachung des Hinweises auf die Patenterteilung: **03.05.1995**
(21) Anmeldenummer: 92105494.6
(22) Anmeldetag: 31.03.1992
(51) Int. Cl.: B01D 15/00, B01J 8/02

(54) **Vorrichtung zur Auftrennung von zumindest zwei biologischen Stoffen in Lösung durch Adsorption**
Apparatus for the separation by adsorption of at least two biological compounds in solution
Appareil pour la séparation par adsorption d'au moins deux composés biologiques en solution

(30) Priorität: 03.04.1991 DE 4110730
(43) Veröffentlichungstag der Anmeldung: 07.10.1992
(73) Patentinhaber: Fresenius AG, 61350 Bad Homburg (DE)
(72) Erfinder: Otto, Veit, W-6690 St. Wendel (DE); Weber, Wolfram, W-6683 Spiesen-Elversberg (DE); Müller-Stein, Iris, W-6652 Bexbach-Höchern (DE); Schiebler, Wolfgang, W-6000 Frankfurt/Main 50 (DE)
(74) Vertreter: Fuchs Mehler Weiss

(56) Entgegenhaltungen:
- EP-A- 0 306 617
- FR-A- 2 336 947
- US-A- 4 155 846

## Beschreibung

Die Erfindung betrifft eine Vorrichtung zur Auftrennung von zumindest zwei biologischen Stoffen in Lösung gemäß dem Oberbegriff des Anspruchs 1.

Um gute Trennleistungen bzw. hohe Kapazitäten von Trennmedien, wie Adsorptionsmitteln, zu erreichen, ist bekanntlich eine gleichmäßige Durchströmung der Trennmaterialien notwendig. Dies erreicht man durch eine optimale, dichte Packung des Trennmaterials, wobei eine dichte Packung des Materials an die Säulenwand besonders kritisch ist. Durch die unterschiedlichen Materialeigenschaften von Adsorbergehäuse und Trennmaterial können sich Zonen mit größeren Zwischenräumen ausbilden, was zu schnellen Strömungsgeschwindigkeiten in diesen Zonen führt und damit zu schlechten Trennleistungen, den sog. Randeffekten.

Zu ähnlichen Effekten kommt es bei Einschlüssen von Luftblasen in dem Trennmaterial. Diese führen zur Kapillarbildung und zu ungleichmäßigen Strömungsgeschwindigkeiten der aufzutrennenden Lösung in den Trennmedien. Um diese Fehler zu minimieren, muß das Trennmittel (a) fest und luftblasenfrei gepackt sein, (b) darf das Material nach seiner Packung möglichst wenig bewegt oder erschüttert werden, (c) muß die Strömung der aufzutrennenden Lösung auf das Trennmedium möglichst gleichmäßig sein, und (d) dürfen während des Betriebs der Vorrichtung keine Luftblasen in das gepackte Trennmedium gelangen.

Um die oben genannten Forderungen zu erfüllen, gibt es bekannterweise prinzipiell zwei Lösungsmöglichkeiten. Bei der einen wird die Vorrichtung vorgepackt, und das gepackte Trennmedium wird durch Siebe so eingeschlossen, daß es sich möglichst wenig bewegen kann (wie es zum Beispiel bei den HPLC-Säulen der Fall ist). Diese Methode hat folgende Nachteile: (1) Nach dem Packen muß die Säule meist in aufwendigen Verpackungen sehr vorsichtig behandelt werden, um während ihres Transportes größere Erschütterungen zu vermeiden, (2) große Temperaturschwankungen, wie sie zum Beispiel bei einer Hitzesterilisierung im Autoklaven auftreten, führen zu unerwünschten Ausdehnungen und Bewegungen des Trennmaterials, (3) durch "Trockenlaufen" der Säule bewirkte Lufteinschlüsse sind nur sehr schwer zu entfernen.

Die alternative, bekannte Methode, bei der vor allem der zuvor unter (1) genannte Nachteil vermieden wird, ist, daß in dem Gehäuse der Vorrichtung genug Totvolumen vorhanden ist, um das Adsorptionsmittel vor Gebrauch vollständig aufzuschütteln und dann zu packen. Das dazu erforderliche, verhältnismäßig große Totvolumen verursacht beim Betrieb der Vorrichtung jedoch hohe lokale Strömungsgeschwindigkeiten, was wiederum zu einer ungleichmäßigen Durchströmung des Trennmediums führt; überdies werden Verdünnungseffekte verursacht, die zur Ausbildung eines Konzentrationsgradienten innerhalb der im Totvolumen befindlichen Flüssigkeit führen, was die Trennleistung der Vorrichtung verschlechtert.

Bislang versuchte man in der Chromatographie dieses Problem dadurch zu lösen, daß die zu trennende Lösung nach dem Packen der Vorrichtung durch einen beweglichen Stempel in unmittelbarer Nähe der Grenzfläche des Säulenmaterials (sog. Säulenbett) erfolgt. Eine derartige Konstruktion hat jedoch folgende Nachteile: (1) Sie ist für die Herstellung von Einmalartikeln, wie sie in der Medizintechnik bevorzugt werden, zu aufwendig und zu kostspielig; (2) bei einer solchen Vorrichtung kann zwar deren Innenraum sterilisiert werden, durch das Einbringen des Stempels wird aber eine unsterile Komponente in den sterilen Innenraum gebracht. Damit kann eine Kontamination des Säulenmaterials nicht ausgeschlossen werden.

Eine solche Garantie ist aber zum Beispiel für die Medizintechnik notwendig und für die Biotechnologie in hohem Maße erwünscht. (3) Schließlich sind nach dem Packen der Säule Lufteinschlüsse hierin nur schwer zu entfernen.

Vorliegender Erfindung liegt in erster Linie die Aufgabe zugrunde, eine als Ganzes hitzesterilisierbare Vorrichtung der eingangs genannten Art zur Durchführung der zuvor genannten zweiten Methode, also das Aufschütteln und Packen des Säulenmaterials vor Benutzung der Vorrichtung derart zu verbessern, daß eine weitgehend homogene Trennung der zu behandelnden Lösung erzielt werden kann, wobei dieser Vorgang des Packens mehrfach, beispielsweise unmittelbar vor Gebrauch der Borrichtung, unter Aufrechterhaltung ihrer Sterilität wiederholbar sein soll.

Ein weiteres Ziel ist beim Betrieb der Vorrichtung die Vermeidung der Ausbildung eines Konzentrationsgradienten in der sich oberhalb der Adsorptionsmittelpackung befindlichen Lösung und auch die Vermeidung einer Berührung der aufzutrennenden Lösung der Luft. Bekanntlich führt das Auftreten eines Konzentrationsgradienten in der Lösung zu einer Verschlechterung der Trennleistung einer Säule.

Die Lösung der Aufgabe erfolgt durch die Merkmale des Anspruchs 1.

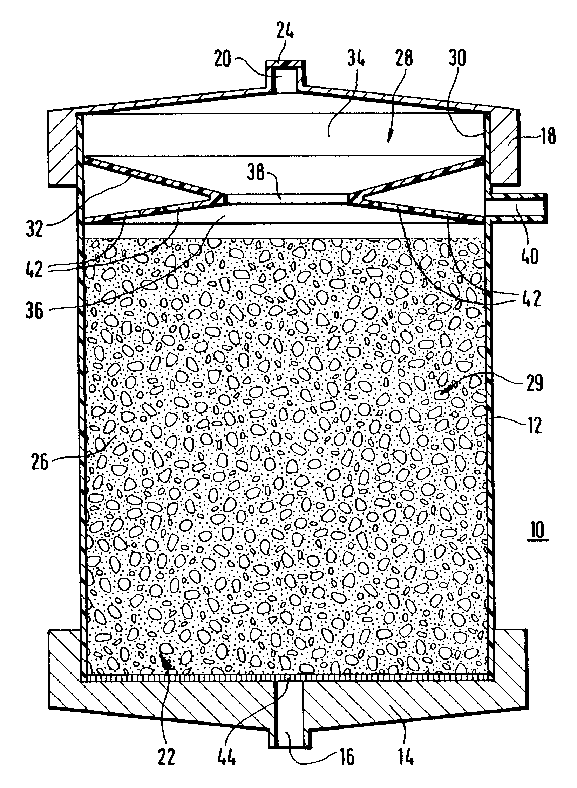

Die Zeichnung zeigt einen Querschnitt durch die erfindungsgemäße Vorrichtung in einer bevorzugten Ausführungsform.

Die erfindungsgemäße Vorrichtung 10 zur Auftrennung von Mischlösungen weist zunächst ein Gehäuse 12 auf, das rohrförmig ausgestaltet ist und vorzugsweise einen kreisförmigen Querschnitt besitzt. Insofern ist es vorteilhafterweise zylinderförmig ausgestaltet.

Die Unterseite des Gehäuses ist verschlossen, im Beispielsfall mit einem Deckel 14, von dem nach unten ein Auslaß 16 abgeht. Die Oberseite des zylinderförmigen Gehäuses 12 ist mit einem weiteren Deckel 18 verschlossen, der vorteilhafterweise mittig eine Öffnung 20 aufweist, durch die überschüssige Luft abgelassen werden kann. Sofern der Innenraum 22 des Gehäuses steril sein soll, ist die Öffnung 20 mit einem mikroporösen hydrophoben Sterilfilter versehen.

Das Gehäuse 12 muß nicht notwendigerweise an den beiden Enden mit einem Deckel 14 und 18 verschlossen sein. Vielmehr kann das Gehäuse auch, sofern es aus Glas oder Kunststoff besteht, an seiner Unterseite zu einem Auslaß ausgezogen sein, während die Oberseite mit einem Filter abgedeckt ist.

Der Innenraum 22 des Gehäuses 12 ist in seinem unteren Bereich mit einem Säulenmaterial 26 gefüllt, über dem sich der restliche obere Innenraumabschnitt 28 erstreckt, der durch eine sich von der Innenwand 30 nach innen erstreckende Verteilungsanordnung 32 in einen oberen Teilraum 34 und einen unteren Teilraum 36 geteilt wird. Beide Teilräume 34 und 36 sind durch eine in der Verteilungsanordnung 32 angebrachte, vorzugsweise zentrale Öffnung 38 miteinander in Strömungsverbindung.

Mit der Umgebung selbst ist die Verteilungsanordnung 32 mittels eines das Gehäuse 12 durchsetzendes, vorzugsweise seitlich angebrachtes Zulaufrohr 40 in Strömungsverbindung.

Die Verteilungsanordnung weist andererseits auf ihrer Unterseite Öffnungen 42 auf, die einerseits mit dem Zulaufrohr 40 und andererseits mit dem Innenraumabschnitt 28 in Strömungsverbindung sind. Somit erfolgt der Austritt der über das Rohr 40 zugeführten aufzutrennenden Lösung in den unteren Teilraum 36.

Um zu verhindern, daß das Säulenmaterial 26, das üblicherweise in Form kleiner Teilchen vorliegt, aus dem Gehäuse 12 ausgeschwemmt wird, ist auf der Unterseite des Behälters, vorteilhafterweise auf dem Deckel 14, ein Sieb 44 vorgesehen, dessen Maschenweite üblicherweise geringer ist als der mittlere Teilchendurchmesser.

Vorzugsweise ist das Mittel zur partiellen Querschnittsverengung des oberen Gehäuseabschnitts, insbesondere die in der Abbildung dargestellte hohlringförmige Verteilungsanordnung 32 für die aufzutrennende Lösung, derart ausgebildet, daß es sich im Querschnitt auf seiner Oberseite oder aber, wie in der Abbildung dargestellt, auch auf seiner Unterseite zu seiner Mitte, d.h. der hier zentralen Öffnung 38 hin konisch verjüngt.

Eine derartige trichterförmige Ausbildung des die erwünschte partielle Querschnittsverengung des oberen Teilraumes 34 bewirkenden Mittels führt hauptsächlich zu einer Perfektionierung des Packungsvorgangs, insofern, als dadurch ein schnelleres und/oder vollständigeres Sedimentieren der beim Packen aufgewirbelten Teilchen im unteren Gehäuseabschnitt gewährleistet ist. Das Mittel zur partiellen Verengung des Querschnitts des oberen Teilraums 34 kann in einer Einschnürung im oberen Teilraum 34, einem an den inneren Seitenwänden desselben angeordneten Geräteelement, zum Beispiel in Form einer Ringscheibe, wobei die Durchmesser derselben vorzugsweise dem Innendurchmesser des Innenraumschnitts 28 entsprechen, oder aber bevorzugt in der hohlringförmigen Verteilungsanordnung 32 bestehen. Dieser Sedimentiervorgang wird durch möglichst glatte Oberflächen der Ober- und/oder Unterseiten der Einschnürung, des Geräteelements bzw. der hohlringartigen Verteilungsanordnung 32 begünstigt. Hierdurch wird gewährleistet, daß nach vollständigem Aufwirbeln des Säulenmaterials dieses Material beim Packen leicht in den unteren Gehäuseabschnitt rutscht und somit der obere Innenraumabschnitt 28 bzw. seine beiden Teilräume 34 und 36 vom Säulenmaterial weitgehend frei sind. Im Falle der Verteilungsanordnung 32 kommt der Vorteil hinzu, daß eine derartige konische Ausbildung eine besonders gleichmäßige Verteilung der Lösung über den Querschnitt der Packung bewirkt.

In der erfindungsgemäßen Vorrichtung ist der Zulauf für die aufzutrennende Lösung derart angeordnet, daß der Austritt derselben im unteren Teilraum 36 erfolgt, der durch die Stelle der Verengung des Querschnitts des oberen Teilraumes 34 und die Grenzfläche des gepackten Säulenmaterials 26 definiert ist.

Die in der Zeichnung dargestellte, bevorzugte zentrale Öffnung 38 ermöglicht das Aufschütteln des Säulenmaterials in einem genügend großen Totvolumen. Durch die große Fläche des die Verengung bewirkenden Mittels ist jedoch eine Konvektion und Diffusion der aufzutrennenden Lösung mit den überstehendem Lösungsmittel weitgehend ausgeschlossen.

Bei der in der Abbildung dargestellten bevorzugten Ausführungsform mit einer hohlringförmigen Verteilungsanordnung 32 als Mittel zur partiellen Querschnittsverengung des oberen Innenraumabschnitts 28 ist das Zulaufrohr 40 seitlich angebracht und mündet in die hohlringförmige Verteilungsanordnung 32, wobei der Austritt der aufzutrennenden Lösung aus diesem in den zuvor definierten Raum durch zumindest eine, auf seiner Unterseite befindliche, ringsum sich erstreckende spaltförmige Öffnung 42 oder mehrere einzelne Öffnungen 42 erfolgt, die zweckmäßigerweise mit einer Einrichtung versehen sind, welche das Eintreten von Adsorptionsmittelteilchen verhindert, insbesondere einem Sieb; dieses unterstützt auch eine gleichmäßige Verteilung der austretenden Lösung über den Packungsquerschnitt.

Das Zulaufrohr 40 kann aber auch zum Beispiel axial angebracht sein, oder ein oder mehrere Zulaufrohre 40 können zum Beispiel auch radial angebracht sein, wobei in jedem Fall das bzw. die Zulaufrohre 40 in den Raum münden, der durch die Stelle der Querschnittsverengung des oberen Innenraumabschnitts 28 und die Grenzfläche des gepackten Säulenmaterials 26 mitumschrieben ist, wobei die Zulauföffnungen zweckmäßigerweise mit einem Sieb versehen sind.

Ein vertikaler Austritt der aufzutrennenden Lösung in diesen Raum ist allerdings weniger vorteilhaft, weil bei größeren Strömungsgeschwindigkeiten die Gefahr besteht, daß das gepackte Adsorptionsmittel aufgewirbelt wird. Bei der bevorzugten Verteilungsanordnung 32 wird eine vertikale Strömung jedoch weitgehend vermieden.

Vorzugsweise weist beim Betrieb der Vorrichtung 10 der Totraum im oberen Innenraumabschnitt 28 ein Volumen auf, das zumindest 5 % des mit dem Säulenmaterials 26 gepackten unteren Innenraumabschnitts 29 beträgt.

Dies gewährleistet, daß dem beim Packvorgang aufgeschüttelten Adsorptionsmittel ein ausreichender Totraum, das ist der Raum, der von der Säulenmaterialpackung 26 nicht beansprucht wird, zur Verfügung steht. Andererseits aber soll der Totraum so klein wie möglich sein.

Die Öffnung 20 ermöglicht das Herauslassen von Luft aus der Vorrichtung, die mit der Lösung oder beim Trockenlaufen der Vorrichtung 10 in das Säulenmaterial 26 eingeschleppt wurde, auch während ihres Betriebs, sowie die Einstellung eines Flüssigkeitspegels, was besonders im Fall des Trockenlaufens der Vorrichtung 10 von Vorteil ist. Versieht man den Luftauslaß 20 mit einem Sterilfilter, so ist es möglich, eine trockengelaufene Vorrichtung im geschlossenen System unter Einführung einer sterilen Lösung neu zu packen, ohne daß die Gefahr einer Kontaminierung besteht.

Der obere Innenraumabschnitts 28 ist, wie oben erläutert, in die miteinander durch die vorzugsweise zentrale Öffnung 38 verbundenen Teilräume 34 und 36, vorzugsweise durch die in der Abbildung dargestellte ringförmige Verteilungsanordnung 32, unterteilt. Dies gewährleistet in Kombination mit der speziellen Anordnung des Zulaufs für die aufzutrennende Lösung, der einen Austritt derselben in den unteren Teilraum 36 ermöglicht, welcher durch die Grenzfläche des gepackten Säulenmaterials 26 und die Stelle der Verengung im oberen Innenraumabschnitt 28, d.h. durch eine durch die hier zentrale Öffnung 38 führende Ebene, mitumgrenzt ist, eine verbesserte Trennung. Es wird nämlich beim Betrieb der Vorrichtung 10 ein gegenseitiger Austausch der jeweils im oberen Teilraum 34 und im unteren Teilraum 36 befindlichen Lösung infolge Diffusion und Konvektion und damit das Auftreten eines Konzentrationsgradienten in der sich oberhalb der Adsorptionsmittelpackung 26, im oberen Innenraumabschnitt 28, d.h. im Totraum, befindlichen Lösung weitgehend ausgeschlossen. Dies wird dadurch erreicht, daß aufgrund dieser speziellen Unterteilung und Lösungszuführung im wesentlichen nur ein Teil des Totraums, nämlich der untere Teilraum 36, von der zugeführten Lösung durchströmt wird. Die Vermeidung eines Konzentrationsgradienten ist deshalb sehr erwünscht, weil derartige Verdünnungseffekte die Leistung einer Vorrichtung 10 zur Auftrennung von Gemischlösungen beträchtlich vermindern.

Im Falle der Trennung von Blut bringt dies den Vorteil, daß dieses in das Lösungsmittel einläuft und somit nicht mit der Luft in Berührung kommt, trotzdem aber auch nicht unnötig verdünnt wird.

Zusammenfassend bietet die erfindungsgemäße Vorrichtung, insbesondere in ihren bevorzugten Ausführungsformen, folgende Vorteile:
Die Vorrichtung 10 bildet ein in sich geschlossenes steriles System und kann bei Auswahl geeigneter Werkstoffe als Ganzes, zum Beispiel in einem Autoklaven, hitzesterilisiert werden; sie eignet sich aufgrund ihres verhältnismäßig einfachen Aufbaus und des Fehlens beweglicher Teile zur Verwendung bei Einmalartikeln.

Die erfindungsgemaße Vorrichtung kann unmittelbar vor Inbetriebnahme durch vollständiges Aufschütteln des Säulenmaterials neu gepackt werden.

Sie gewährleistet eine gute Verteilung der aufzutrennenden Lösung über dem Querschnitt der Adsorptionsmittelpackung unter weitgehender Vermeidung eines Aufwirbelns derselben.

Darüber hinaus ermöglicht sie während ihres Betriebes die Einhaltung eines verhältnismäßig kleinen Totraumes für die Lösung und die weitgehende Vermeidung des Auftretens eines Konzentrationsgradienten im Totraum. Sie ermöglicht ferner eine Luftabscheidung auch während des Betriebes, wodurch ein Absetzen von mit der aufzutrennenden Lösung eingeschleppten Luftblasen auf der Grenzfläche des gepackten Säulenmaterials, und ein Eindringen derselben in die Säulenmaterialpackung verhindert wird. Es ist zusätzlich auch möglich, nach dem Trockenlaufen eine Neufüllung mit Lösung unter sterilen Bedingungen vorzunehmen.

## Patentansprüche

1. Vorrichtung zur Auftrennung von zumindest zwei biologischen Stoffen in Lösung durch Adsorption, umfassend ein Gehäuse (12) mit einem unteren Innenraumabschnitt (29), welcher zumindest einen Ablauf (16) hat, mit Adsorptionsmittel gepackt ist und an seinem unteren Ende eine flüssigkeitsdurchlässige Einrichtung aufweist, die das Austreten von Adsorptionsmittelteilchen hieraus in den darunterliegenden Behälterteil für die aufgetrennte Lösung verhindert, einem oberen Innenraumabschnitt (28), der adsorptionsmittelfrei ist und in den zumindest ein Zulauf (40) für die aufzutrennende Lösung mündet, wobei dieser obere Innenraumabschnitt (28) mit einem Mittel, das eine partielle Verengung von dessen Querschnitt bewirkt, so daß dieser Abschnitt (28) in einen oberen und einen unteren Teilraum (34 bzw. 36), die über eine Öffnung (38) miteinander bezüglich der aufzutrennenden Lösung in Strömungsverbindung stehen, unterteilt ist, wobei der obere Teilraum (34) und der untere Teilraum (36) auch bezüglich der Adsorptionsmittelteilchen in Strömungsverbindung stehen, das Zulaufrohr (40) für die aufzutrennende Lösung so angeordnet ist, daß der Austritt derselben in den unteren Teilraum (36) erfolgt, und die Vorrichtung als sterile in sich geschlossene Einheit vorliegt.

2. Vorrichtung gemäß Anspruch 1, dadurch gekennzeichnet, daß der obere Teilraum (34) des oberen Innenraumabschnitts (28) ein größeres Volumen aufweist als der untere Teilraum (36).

3. Vorrichtung gemäß Anspruch 1 oder 2, dadurch gekennzeichnet, daß der Totraum im oberen Innenraumabschnitt (28) ein Volumen aufweist, das zumindest 5 % des gepackten unteren Innenraumabschnitts beträgt.

4. Vorrichtung gemäß einem der Ansprüche 1 bis 3, dadurch gekennzeichnet, daß das Mittel zur partiellen Querschnittsverengung des oberen Innenraumabschnitts (28) ein mit dessen Innenwänden (30) ringsum verbundenes Hohlringelement (32) mit einer zentralen Öffnung (38) ist.

5. Vorrichtung gemäß Anspruch 4, dadurch gekennzeichnet, daß das Ringelement als hohlringförmige Verteilungsanordnung (32) ausgebildet ist und auf seiner Unterseite zumindest eine, ringsum durchgehende, spaltförmige Öffnung (42) oder mehrere einzelne Öffnungen (42) aufweist, die mit einer Einrichtung versehen sind, welche das Eintreten von Säulenmaterialteilchen verhindert, und daß das Zulaufrohr bzw. die Zulaufrohre (40) für die aufzutrennende Lösung in den Hohlring (32) münden.

6. Vorrichtung gemäß Anspruch 5, dadurch gekennzeichnet, daß die Einrichtung aus mindestens einem Sieb besteht.

7. Vorrichtung gemäß Anspruch 5 oder 6, dadurch gekennzeichnet, daß die Öffnungen (42) in gleichem Abstand voneinander angeordnet sind.

8. Vorrichtung gemäß einem der Ansprüche 4 bis 7, dadurch gekennzeichnet, daß die hohlringförmige Verteilungsanordnung (32) einen sich auf ihrer Ober- und/oder Unterseite radial nach innen hin verjüngenden Querschnitt aufweist.

9. Vorrichtung gemäß einem der Ansprüche 4 bis 8, dadurch gekennzeichnet, daß zumindest die Oberseite der Verteilungsanordnung (32) eine glatte Oberfläche aufweist.

10. Vorrichtung gemäß einem der Ansprüche 1 bis 3, dadurch gekennzeichnet, daß das Mittel zur partiellen Querschnittsverengung eine Einschnürung im oberen Innenraumabschnitt (28) ist, deren Ober- und/oder Unterseite sich nach der Mitte hin im Querschnitt gegebenenfalls verjüngt, wobei diese Seite(n) insbesondere eine glatte Oberfläche aufweisen.

11. Vorrichtung gemäß einem der Ansprüche 1 bis 10, dadurch gekennzeichnet, daß die Oberseite des Gehäuses (12) eine verschließbare Luftauslaßöffnung (20) aufweist.

## Claims

1. Apparatus for separating at least two biological substances in solution by adsorption, comprising a housing (12) having a lower interior section (29) which has at least one outlet (16), is packed with adsorption agent and comprises at its lower end a liquid-permeable means which prevents emergence of adsorption agent particles therefrom into the container section disposed therebelow for the solution to be separated, an upper section (28) which is free from adsorption agent and into which at least one feed (40) for the solution to be separated opens, with this upper interior section (28) having a means effecting a partial constriction of the cross-section thereof in such a manner that said section (28) is divided into an upper and a lower subspace (34, 36) which via an opening (38) are in flow connection with each other as regards the solution to be separated, with the upper subspace (34) and the lower subspace (36) also being in flow connection as regards the adsorption agent particles, the feed tube (40) for the solution to be separated being arranged in such a manner that the discharge thereof takes place into the lower subspace (36), and the apparatus being a self-contained unit in sterile form.

2. Apparatus according to claim 1, characterized in that the upper subspace (34) of the upper interior section (28) has a larger volume than the lower subspace (36).

3. Apparatus according to claim 1 or 2 characterized in that the dead space in the upper interior section (28) has a volume which is at least 5% of the packed lower interior section.

4. Apparatus according to any one of claims 1 to 3, characterized in that the means for partial cross-section constriction of the upper interior section (28) is a hollow annular element (32) connected all round with the interior walls (30) thereof and having a central opening (38).

5. Apparatus according to claim 4, characterized in that the annular element is formed as hollow annular distributing arrangement (32) and comprises at its lower side at least one gap-like opening (42) continuous all round or a plurality of individual openings (42) which are provided with a means which prevents the entrance of column material particles and that the feed tube or feed tubes (40) for the solution to be separated open into the hollow ring (32).

6. Apparatus according to claim 5, characterized in that the means consists of at least one sieve.

7. Apparatus according to claim 5 or 6, characterized in that the openings (42) are arranged at the same distance from each other.

8. Apparatus according to any one of claims 4 to 7, characterized in that the hollow annular distributing arrangement (32) comprises a cross-section tapering radially inwardly on its upper and/or lower side.

9. Apparatus according to any one of claims 4 to 8, characterized in that at least the upper side of the distributing arrangement (32) has a smooth surface.

10. Apparatus according to any one of claims 1 to 3, characterized in that the means for partial cross-section constriction is a constriction in the upper interior section (28), the upper and/or lower side of which possibly tapers in cross-section towards the centre, said side(s) having in particular a smooth surface.

11. Apparatus according to any one of claims 1 to 10, characterized in that the upper side of the housing (12) comprises a closable air outlet opening (29).

## Revendications

1. Dispositif de séparation d'au moins deux substances biologiques en solution par adsorption, comprenant un boîtier (12) comportant une partie inférieure d'espace intérieur (29) équipée d'au moins une sortie (16), remplie d'adsorbant tassé et présentant, à son extrémité inférieure un dispositif perméable aux liquides empêchant les particules d'adsorbant de sortir et de passer dans la partie de boîtier destinée à la solution séparée, située en-dessous, comportant une partie supérieure (28), dépourvue d'adsorbant et dans laquelle débouche au moins une conduite d'arrivée (40) pour la solution à séparer, dispositif comprenant en outre une partie supérieure d'espace intérieur (28) contenant des moyens provoquant un rétrécissement partiel de sa section transversale, de telle sorte que cette partie (28) est divisée en un compartiment supérieur et inférieur (resp. 34 et 36), qui, par l'intermédiaire d'une ouverture (38), sont en liaison d'écoulement vis-à-vis de la solution à séparer, le compartiment supérieur (34) et le compartiment inférieur (36) étant également en liaison d'écoulement vis-à-vis des particules d'adsorbant, la conduite d'arrivée (40) destinée à la solution à séparer étant disposée de telle sorte que la sortie de celle-ci se produise dans le compartiment inférieur (36), et le dispositif étant une unité fermée stérile.

2. Dispositif selon la revendication 1, caractérisé en ce que le compartiment supérieur (34) de la partie supérieure d'espace intérieur (28) est de plus gros volume que le compartiment inférieur (36).

3. Dispositif selon la revendication 1 ou 2, caractérisé en ce que le volume mort, dans la partie supérieure d'espace intérieur (28) représente au moins 5 % du volume de la partie inférieure d'espace intérieur contenant le produit tassé.

4. Dispositif selon l'une des revendications 1 à 3, caractérisé en ce que le dispositif de rétrécissement partiel de la section transversale de la partie supérieure d'espace intérieur (28) est un élément annulaire creux (32), relié aux parois intérieures (30) de celle-ci sur tout son pourtour, et présentant une ouverture centrale (38).

5. Dispositif selon la revendication 4, caractérisé en ce que l'élément annulaire est conformé en dispositif de répartition (32) en forme d'anneau creux et présente, sur sa face inférieure, au moins une ouverture (42) en forme de fente, continue sur tout le pourtour, ou plusieurs ouvertures (42) isolées, qui sont équipées d'un dispositif empêchant des particules de matière de colonne de pénétrer, et en ce que la conduite d'arrivée et/ou les conduites d'arrivée (40) destinée(s) à la solution à séparer débouche(nt) dans l'anneau creux (32).

6. Dispositif selon la revendication 5, caractérisé en ce que le dispositif est composé d'au moins un tamis.

7. Dispositif selon la revendication 5 ou 6, caractérisé en ce que les ouvertures (42) sont disposées à distance égale les unes des autres.

8. Dispositif selon l'une des revendications 4 à 7, caractérisé en ce que le dispositif de répartition (32) en forme d'anneau creux présente une section transversale se rétrécissant radialement vers l'intérieur, sur sa face supérieure et/ou inférieure.

9. Dispositif selon l'une des revendications 4 à 8, caractérisé en ce qu'au moins la face supérieure du dispositif de répartition (32) possède une surface lisse.

10. Dispositif selon l'une des revendications 1 à 3, caractérisé en ce que le dispositif de rétrécissement partiel de la section transversale est un resserrement de la partie supérieure d'espace intérieur (28), dont la face supérieure et/ou inférieure, dans sa section transversale, va en se rétrécissant, le cas échéant, en direction du milieu, cette face (ces faces) présentant en particulier une surface lisse.

11. Dispositif selon l'une des revendications 1 à 10, caractérisé en ce que la face supérieure du boîtier (12) présente une ouverture d'échappement de l'air (20) susceptible d'être fermée.
